# EUROPEAN PATENT APPLICATION

(11) **EP 4 708 598 A1**
(43) Date of publication of application: **11.03.2026**
(21) Application number: 25195585.2
(22) Date of filing: 13.08.2025
(51) Int. Cl.: H02G 5/00, H02G 5/02, H01M 50/20, H01M 50/262, H01M 50/505

(54) **BRACKET STRUCTURE AND BATTERY PACK**

(30) Priority: 20.08.2024 CN 202422028309 U; 20.11.2024 WO PCT/CN2024/133140
(71) Applicant: Eve Energy Co., Ltd., Huizhou, Guangdong 516006 (CN)
(72) Inventor: FAN, Xin, Huizhou, Guangdong, 516006 (CN); CHEN, Zhiwei, Huizhou, Guangdong, 516006 (CN)
(74) Representative: Berggren Oy

(57) **Abstract**

A bracket structure and a battery pack are provided herein. The bracket structure includes a mounting bracket (1), the mounting bracket (1) comprises a first mounting end (1A) and a second mounting end (1B) disposed opposite to each other in a first direction(Z), the first mounting end (1A) is configured to mount a copper busbar (2), the second mounting end (1B) is configured to be connected to a battery box(11), at least one side of the mounting bracket (1) in a second direction (Y) is configured to mount a harness (3), the second direction (Y) intersects with the first direction(Z); in the first direction(Z), the harness (3) is located between the first mounting end (1A) and the second mounting end(1B).

## Description

### TECHNICAL FIELD

The present disclosure relates to the field of battery technology, and in particular to a bracket structure and a battery pack.

### BACKGROUND

In the related art, each of the electrical components in the battery pack are connected to each other by a copper busbar and a harness. The harness is fixed in the battery pack by a cable tie, and the copper busbar is fixed in the battery pack by a screw or the like.

### SUMMARY

However, such fixing manner will cause the layout of the harness and the copper busbar to be scattered, and will take up too much space in the battery pack.

In a first aspect, the present disclosure provides a bracket structure, the bracket structure includes a mounting bracket, the mounting bracket includes a first mounting end and a second mounting end disposed opposite to each other in a first direction, the first mounting end is configured to mount a copper busbar, the second mounting end is configured to be connected to a battery box, at least one side of the mounting bracket in a second direction is configured to mount a harness, and the second direction intersects with the first direction.

In the first direction, the harness is located between the first mounting end and the second mounting end.

In a second aspect, the present disclosure provides a battery pack, the battery pack includes:
a battery box;
a bracket structure, the bracket structure is fixedly connected to the battery box.

### BRIEF DESCRIPTION OF THE DRAWINGS

FIG.1 is an exploded schematic diagram of a bracket structure provided by an embodiment of the present disclosure;
FIG.2 is a schematic structural diagram of a bracket structure provided by an embodiment of the present disclosure;
FIG.3 is a schematic assembly diagram of the bracket structure assembled in a battery pack provided in an embodiment of the present disclosure;
FIG.4 is a schematic assembly diagram of the bracket structure assembled in a battery pack provided in an embodiment of the present disclosure;
FIG.5 is an enlarged schematic diagram at A in FIG.4;
FIG.6 is a schematic assembly diagram of the bracket structure and the battery box provided in an embodiment of the present disclosure.

Description of reference numerals:
1. Mounting bracket; 101. Bracket body; 102. Base; 1A. First mounting end; 1B. Second mounting end; 2. Copper busbar; 3. Harness; 4. Limiting portion; 5. Mounting slot; 6. Opening; 7. First connecting piece; 71. Connecting portion; 72. Fixing portion; 8. Fixing groove; 9. Wire slot; 11. Battery case; 12. Second connecting piece; 13. Bushing; 14. Weight-reducing slot; 15. Mounting hole.

### DETAILED DESCRIPTION

In the description of the present disclosure, unless otherwise clearly specified and limited, the terms "interconnected", "connected", and "fixed" should be understood in a broad sense. For example, it may be a fixed connection, a detachable connection, or an integral connection; it may also be a mechanical connection or an electrical connection; it may be a direct connection or an indirect connection through an intermediate medium, it may be the communication inside two elements or the interaction relationship between two elements. For one of ordinary skill in the present art, the specific meanings of the above terms in the present disclosure may be understood according to the specific circumstances.

In the present disclosure, unless otherwise clearly specified and limited, a first feature being "above" or "below" a second feature may include the first feature being direct contact with the second feature, or may include the first feature being not in contact with the second feature but being in contact with each other through another feature between them. Moreover, a first feature being "above", "on" and "top" a second feature includes the first feature being directly above and obliquely above the second feature, and the first feature having a higher horizontal height than the second feature. The first feature being "below", "under" and "underneath" a second feature includes the first feature being directly below and obliquely below the second feature, and the first feature having a lower horizontal height than the second feature.

In the description of the present embodiment, the directional or positional relationships such as the terms "upper", "lower", "left", "right", "front" and "rear" are based on the directional or positional relationships shown in the drawings, and are for the convenience of description and simplification of operation, rather than indicating or implying that the device or element referred to must have a specific direction, be constructed and operated in a specific direction, and therefore cannot be understood as limiting the present disclosure. In addition, the terms "first" and "second" are used to distinguish in the description and have no special meaning.

The mounting bracket provided in the embodiment of the present disclosure includes a first mounting end and a second mounting end disposed opposite to each other in a first direction, the first mounting end is configured to mount a copper busbar, the second mounting end is configured to be connected to a battery case, and at least one side of the mounting bracket in the second direction is configured to mount a harness; in the first direction, the harness is located between the first mounting end and the second mounting end; where, by mounting the copper busbar on the first mounting end of the mounting bracket and mounting the harness on a side of the mounting bracket in the second direction, both the copper busbar and the harness can be integratedly mounted on the mounting bracket, thereby concentrating the arrangement of the harness and the copper busbar in the battery pack to reduce the space occupied by the harness and the copper busbar in the battery pack.

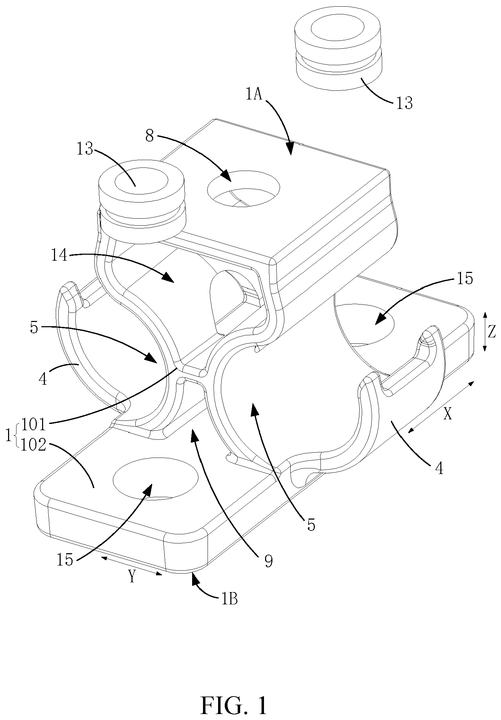

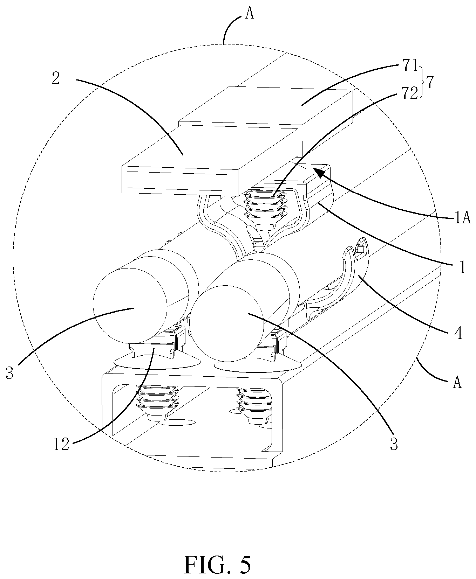

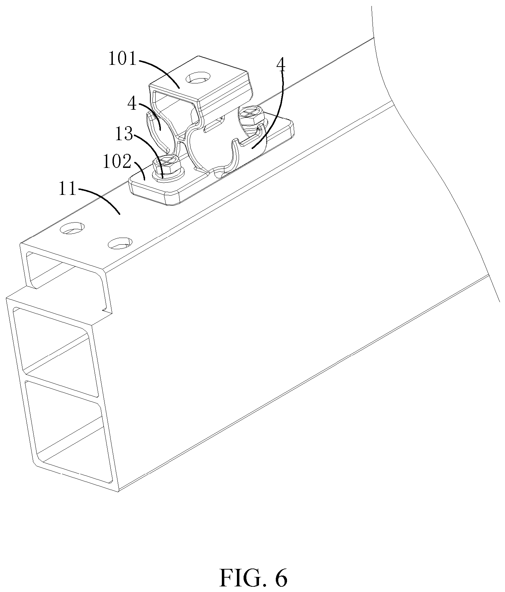

The present disclosure proposes a bracket structure, and FIG. 1 to FIG. 6 are some embodiments of the present disclosure. As shown in the drawings, the Z direction in the drawings is the first direction, the Y direction is the second direction, and the X direction is the third direction. The first direction intersects with the second direction, and both the first direction and the second direction are perpendicular to the third direction. The following description is based on the first direction X, the second direction Y, and the third direction Z.

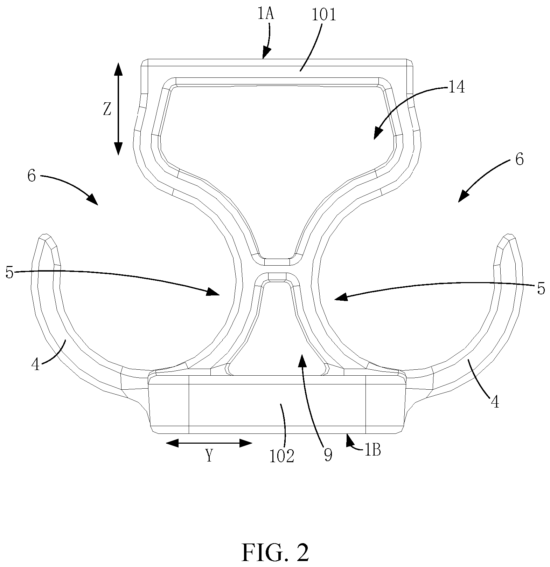

Please refer to FIG. 1 and FIG. 2. In some embodiments of the present disclosure, the mounting bracket 1 includes a first mounting end 1A in a first direction Z, and the first mounting end 1A is configured to mount a copper busbar 2. At least one side of the mounting bracket 1 in a second direction Y is configured to mount a harness 3.

The mounting bracket 1 further includes a second mounting end 1B disposed opposite to the first mounting end 1A in the first direction Z, and the second mounting end 1B is configured to be connected to the battery box. The harness 3 mounted on a side of the mounting bracket 1 in the second direction Y is located between the first mounting end 1A and the second mounting end 1B.

In the technical solution of the present disclosure, the copper busbar 2 is mounted on the first mounting end 1A of the mounting bracket 1, and the harness 3 is mounted on a side of the mounting bracket 1 in the second direction Y, so that both the copper busbar 2 and the harness 3 can be integrated and mounted on the mounting bracket 1, thereby concentrating the arrangement of the harness 3 and the copper busbar 2 in the battery pack to reduce the space occupied by the harness 3 and the copper busbar 2 in the battery pack.

It may be understood that since the copper busbar 2 is disposed on the first mounting end 1A of the mounting bracket 1 in the first direction Z, the harness 3 is located on a side of the mounting bracket 1 in the second direction Y and is located between the first mounting end 1A and the second mounting end 1B, that is, the copper busbar 2 and the harness 3 are arranged and disposed in sequence in the first direction Z, the space dimension in the first direction Z in the battery pack can be effectively utilized, that is, the mounting bracket 1 can integrate and mount the copper busbar 2 and the harness 3 together in the first direction Z.

In one embodiment of the present disclosure, the harness 3 can be mounted on a side of the mounting bracket 1 in the second direction Y. In another embodiment of the present disclosure, the harness 3 can be mounted on both opposite sides of the mounting bracket 1 in the second direction Y.

Please refer to FIG. 1 and FIG. 2 again. In some embodiments of the present disclosure, the harness 3 can be mounted on both sides of the mounting bracket 1 in the second direction Y. This configuration allows more harness 3 to be integrated and mounted on the mounting bracket 1, and different harness 3 can be mounted on the opposite sides of the mounting bracket 1 in the second direction Y according to the different positions of the harness 3 in the battery pack.

In addition, there is no limitation on the relative fixing form between the harness 3 and the mounting bracket 1, which may be either snap-fitted or bonded or the like.

Please refer to FIG. 2 to FIG. 3. In some embodiments of the present disclosure, the bracket structure further includes a limiting portion 4, which is disposed on a side of the mounting bracket 1 in the second direction Y and is connected to the mounting bracket 1; at least a portion of the limiting portion 4 is spaced apart from the mounting bracket 1 in the second direction Y; in the present embodiment, at least a portion of the limiting portion 4 is spaced apart from the mounting bracket 1 in the second direction Y by a certain space. That is, the space by which the at least a portion of the limiting portion 4 is spaced from the mounting bracket 1 in the second direction Y is available to accommodate the harness 3, and the operator or the operating tool may mount the harness 3 between the limiting portion 4 and the mounting bracket 1, thereby achieving the fixation of the relative position of the mounting bracket 1 and the harness 3.

It can be understood that the limiting portion 4 can limit the harness 3 from departing from the mounting bracket 1 in the second direction Y.

In addition, in some embodiments of the present disclosure, the portion where the limiting portion 4 is connected to the mounting bracket 1 is the first portion, and the other portion where the limiting portion and the mounting bracket 1 are spaced apart in the second direction Y is the second portion, the first portion is connected to the second portion, and the first portion is located on the side of the second portion that is away from the first mounting end 1A in the first direction Z; this arrangement is provided because due to the action of gravity, the harness 3 will move in a direction away from the first mounting end 1A in the first direction Z, and the first portion is the portion where the limiting portion 4 is connected to the mounting bracket 1, thereby stopping the movement of the harness 3 in the first direction Z and avoiding the harness 3 from separating from the mounting bracket 1.

In some embodiments of the present disclosure, a mounting groove 5 is provided on a side of the mounting bracket 1 in the second direction Y, and the mounting groove 5 is configured to accommodate at least a portion of the harness 3; such a configuration allows the bracket structure to not occupy too much space in the battery pack in the second direction Y.

The size fixing of the harness 3 mounted on a side of the mounting bracket 1 in the second direction Y is used for explanation, and a mounting groove 5 is provided on the mounting bracket 1, and part of the harness 3 can be located in the mounting groove 5, that is, only part of the harness 3 will protrude from the mounting bracket 1 in the second direction Y, so as to reduce the overall size of the limiting portion 4 and the mounting bracket 1 in the second direction Y, thereby reducing the size of the space occupied by the bracket structure in the battery pack in the second direction Y.

Likewise, since the mounting bracket 1 is provided with the mounting groove 5, the overall size and weight of the mounting bracket 1 may also be reduced.

In some embodiments of the present disclosure, the cross-section of the limiting portion 4 on the plane where the first direction Z and the second direction Y are located is in an arc-shape; that is, when the harness 3 is disposed between the limiting portion 4 and the mounting bracket 1, the shape of the side of the limiting portion 4 close to the harness 3 matches the outer peripheral shape of the harness 3, so that when the harness 3 is mounted between the limiting portion 4 and the mounting bracket 1, the space waste between the limiting portion 4 and the harness 3 is reduced to effectively utilize the space between the limiting portion 4 and the mounting bracket 1.

In some embodiments of the present disclosure, the mounting groove 5 located on the mounting bracket 1 is also in an arc shape, so that the groove wall shape of the mounting groove 5 matches the outer peripheral shape of the harness 3, so that when the harness 3 is mounted between the limiting portion 4 and the mounting bracket 1, the space waste between the mounting bracket 1 and the harness 3 is reduced, so as to effectively utilize the space between the limiting portion 4 and the mounting bracket 1.

In some embodiments of the present disclosure, one end of the limiting portion 4 is connected to the mounting bracket 1, and the other end is spaced apart from the mounting bracket 1 to form an opening 6; that is, in the present embodiment, the harness 3 can enter between the limiting portion 4 and the mounting bracket 1 from the opening 6 to achieve fixation of the harness 3 on the bracket structure.

In some embodiments of the present disclosure, the limiting portion 4 is elastic; the size of the opening 6 in the second direction Y is smaller than the size of the harness 3 in the second direction Y; that is, in the present embodiment, in a case that the harness 3 is located between the limiting portion 4 and the mounting bracket 1 and is not subjected to an external force, the size of the opening 6 is set so that the harness 3 is not easy to fall out from between the limiting portion 4 and the mounting bracket 1, so as to ensure the stability of the mounting of the harness 3 on the bracket structure.

When the harness 3 is mounted on the bracket structure, since the limiting portion 4 is elastic, it may be elastically deformed under the action of external force. At this time, the size of the opening 6 in the second direction Y increases, so that the harness 3 can enter between the limiting part 4 and the mounting bracket 1.

There is no restriction on the fixing form of the mounting bracket 1 and the limiting portion 4. In an embodiment, the mounting bracket 1 and the limiting portion 4 can be integrally formed therebetween; in another embodiment of the present disclosure, the mounting bracket 1 and the limiting portion 4 are independent components and are connected to each other by means of clamping, melting connection, etc.

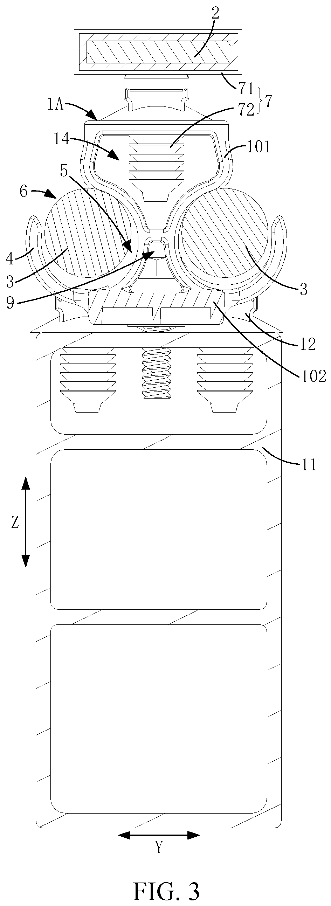

Please refer to FIG. 3 to FIG. 5. In some embodiments of the present disclosure, the bracket structure further includes a first connecting member 7, which is disposed at the first mounting end 1A. The first connecting member 7 is configured to be connected to the copper busbar 2; that is, the copper busbar 2 is connected to the mounting bracket 1 through the first connecting member 7.

In some embodiments of the present disclosure, the first connecting member 7 includes a connecting portion 71 and a fixing portion 72. The connecting portion 71 is sleeved on the copper busbar 2. The fixing portion 72 is connected to the connecting portion 71, and the fixing portion 72 is mounted on the first mounting end 1A. In the present embodiment, the connecting portion 71 is sleeved on the outer periphery of the copper busbar 2 to limit the separation of the copper busbar 2 from the first connecting member 7. Meanwhile, the fixing portion 72 is connected to the mounting bracket 1 to achieve the fixation of the copper busbar 2 on the first mounting end 1A.

In some embodiments of the present disclosure, the mounting bracket 1 is provided with a fixing groove 8 extending along the first direction Z on the first mounting end 1A; at least a portion of the fixing portion 72 is limited in the fixing groove 8; in the present embodiment, fixing of the copper busbar 2 on the first mounting end 1A may achieved by fitting between the fixing groove 8 and the fixing portion 72.

The fitting form between the fixing groove 8 and the fixing portion 72 is not limited. In one embodiment of the present disclosure, the fixing groove 8 may be a threaded groove, and the fixing portion 72 is screwed into the fixing groove 8. In another embodiment of the present disclosure, the fixing groove 8 may be a snapping slot, and a snapping protrusion is provided on the outer periphery of the fixing portion 72, and the snapping protrusion on the outer periphery of the fixing portion 72 is snap-fitted with the fixing groove 8.

In some embodiments of the present disclosure, the connecting portion 71 is a cable tie, through which the copper busbar 2 is packed and limited, and the fixing portion 72 is disposed on a side of the cable tie.

When the copper busbar 2 is fixed at the first mounting end 1A, the extension direction of the copper busbar 2 is not limited. In one embodiment of the present disclosure, the copper busbar 2 fixed at the first mounting end 1A extends in a plane perpendicular to the first direction Z. In another embodiment of the present disclosure, the copper busbar 2 fixed at the first mounting end 1A extends in a plane perpendicular to the second direction Y and is vertically disposed on the first mounting end 1A.

In some embodiments of the present disclosure, the copper busbar 2 fixed on the first mounting end 1A extends on a plane perpendicular to the first direction Z, that is, the copper busbar 2 is arranged in a flat plate shape and is laid flat on the first mounting end 1A; such arrangement allows the copper busbar 2 to not occupy too much space in the battery pack in the first direction Z.

In some embodiments of the present disclosure, the copper busbar 2 is extended and disposed along the third direction X.

In some embodiments of the present disclosure, a wire groove 9 extending along a third direction X is penetratingly provided on the mounting bracket 1. By providing the wire groove 9, the wire groove 9 is available to pass through different types of wires, signal lines, etc. in the battery pack, so that different types of wires, signal lines, etc. in the battery pack may be limited on the bracket structure, thereby improving the integrated mounting degree of different types of wires, signal lines, etc. in the battery pack.

In some embodiments of the present disclosure, the wire groove 9 can be mounted with electric wires, signal wires, etc., which are smaller in size than the harness 3 located between the mounting bracket 1 and the limiting portion 4.

In some embodiments of the present disclosure, at least a portion of the mounting bracket 1 is disposed as a hollowed-out form. That is, in the present embodiment, at least one weight-reducing groove 14 is provided on the mounting bracket 1. The design of the weight-reducing groove 14 can reduce the weight of the mounting bracket 1 while it is also possible to save consumables of the mounting bracket 1.

In some embodiments of the present disclosure, the weight-reducing groove 14 is disposed to penetrate through the mounting bracket 1 in the third direction X.

In some embodiments of the present disclosure, the weight-reducing groove 14 and the wire groove 9 are disposed at intervals in the first direction Z, and the weight-reducing groove 14 is also communicated with the fixing groove 8, and at least a portion of the fixing portion 72 may extend from the fixing groove 8 into the weight-reducing groove 14.

In some embodiments of the present disclosure, the wire groove 9 is located between two mounting grooves 5 disposed opposite to each other in the second direction Y of the mounting bracket 1.

In some embodiments of the present disclosure, the mounting bracket 1 includes a bracket body 101 and a base 102 interconnected in a first direction Z, the first mounting end 1A is disposed on the bracket body 101, and the second mounting end 1B is disposed on the base 102; at least one side of the mounting bracket 1 in the second direction Y is configured to mount the harness 3; that is, in the present embodiment, the copper bus 2 and the harness 3 are both fixed on the bracket body 101, and the base 102 is configured to be fixed to the battery box 11; that is, the bracket body 101 is fixed to the battery box 11 through the base 102.

There is no restriction on the fixing form between the base 102 and the bracket body 101. In an embodiment, the bracket body 101 and the base 102 can be integrally formed therebeween; in another embodiment of the present disclosure, the bracket body 101 and the base 102 are both independent components and are connected to each other by means of clamping, melting connection, etc.

In some embodiments of the present disclosure, the limiting portion 4, the bracket body 101 and the base 102 are integrally formed, thereby reducing the production process of preparing the bracket structure.

In some embodiments of the present disclosure, the base 102 extends along the third direction X, and two mounting holes 15 are provided on the base 102, and the bracket body 101 is located between the two mounting holes 15. The base 102 is provided with a bushing 13 in both of the two mounting holes 15, and a bolt passes through the bushing 13 and are connected to the screw hole on the battery box 11 so as to fix the bracket structure on the battery box 11.

In some embodiments of the present disclosure, the materials of the bracket body 101, the base 102 and the limiting portion 4 are all plastic, and the material of the bushing 13 is metal, that is, the hardness of the bushing 13 is greater than the hardness of the base 102, so as to avoid damaging the base 102 when the bolts and the bracket structure are assembled.

The present disclosure also proposes a battery pack, which includes a battery box 11 and at least one bracket structure, which is fixedly connected to the battery box 11. The bracket structure is as described above. Since the battery pack adopts all the technical solutions of all the above-mentioned embodiments, it has at least the beneficial effects brought by the technical solutions of the above-mentioned embodiments, which will not be described one by one here.

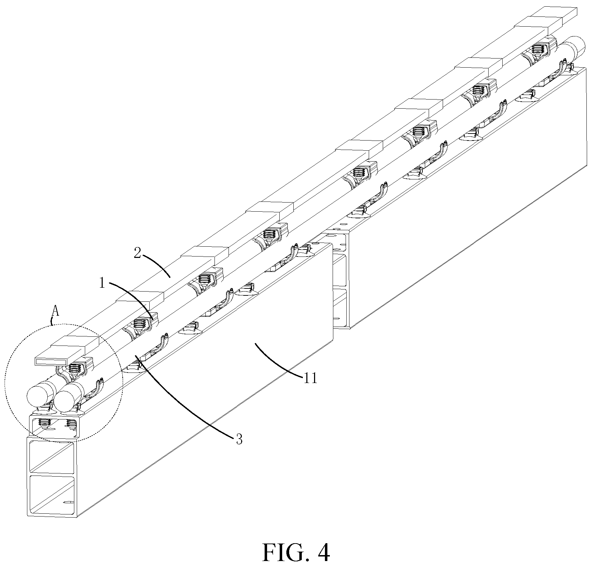

A plurality of bracket structures are arranged and disposed along the extension direction of the copper bus 2 and the harness 3, that is, as shown in FIG. 4, the plurality of bracket structures are arranged and disposed at intervals in the third direction X.

In some embodiments of the present disclosure, the battery pack further includes a second connector 12, and the second connector 12 is sleeved on the copper busbar 2; the second connector 12 is further fixedly connected to the battery box11; by providing the second connector 12, the reliability of fixing the harness 3 in the battery pack is enhanced.

The second connecting member 12 has a similar structure to the first connecting member 7, and will not be described in detail herein.

## Claims

1. A bracket structure, **characterized by** comprising a mounting bracket (1), the mounting bracket (1) comprising a first mounting end (1A) and a second mounting end (1B) disposed opposite to each other in a first direction(Z), wherein the first mounting end (1A) is configured to mount a copper busbar (2), the second mounting end (1B) is configured to be connected to a battery box(11), at least one side of the mounting bracket (1) in a second direction (Y) is configured to mount a harness (3), the second direction (Y) intersects with the first direction(Z);
in the first direction(Z), the harness (3) is located between the first mounting end (1A) and the second mounting end (1B).

2. The bracket structure according to claim 1, **characterized in that** the bracket structure further comprises a limiting portion (4), wherein the limiting portion (4) is disposed on a side of the mounting bracket (1) in the second direction (Y) and connected to the mounting bracket (1).

3. The bracket structure according to claim 2, **characterized in that** at least a part of the limiting portion (4) is spaced apart from the mounting bracket (1) in the second direction (Y).

4. The bracket structure according to claim 2, **characterized in that**, the harness (3) is disposed between the limiting portion (4) and the mounting bracket (1).

5. The bracket structure according to claim 2, **characterized in that** the mounting bracket (1) is provided with a mounting groove (5) on a side in the second direction (Y), and the mounting groove (5) is configured to accommodate at least a portion of the harness (3).

6. The bracket structure according to claim 2, **characterized in that** a cross section of the limiting portion (4) on a plane where the first direction (Z) and the second direction (Y) are located is in an arc-shape.

7. The bracket structure according to claim 2, **characterized in that**, one end of the limiting portion (4) is connected to the mounting bracket (1), and another end of the limiting portion (4) is spaced apart from the mounting bracket (1) to form an opening (6).

8. The bracket structure according to claim 2, **characterized in that** the limiting portion (4) is elastic.

9. The bracket structure according to claim 7, **characterized in that**, a size of the opening (6) in the second direction (Y) is smaller than a size of the harness (3) in a second direction (Y).

10. The bracket structure according to claim 1, **characterized in that** the bracket structure further comprises a first connecting member (7), wherein the first connecting member (7) is disposed at the first mounting end (1A), and the first connecting member (7) comprises:
a connecting portion (71), sleeved on the copper busbar (2); and
a fixing portion (72), connected to the connecting portion (71), and wherein the fixing portion (72) is mounted at the first mounting end (1A).

11. The bracket structure according to claim 10, **characterized in that** the mounting bracket (1) is provided with a fixing groove (8) extending along the first direction (Z) at the first mounting end (1A);

12. The bracket structure according to claim 11, **characterized in that**, at least a part of the fixing portion (72) is limited in the fixing groove (8).

13. The bracket structure according to any one of claims 1 to 12, **characterized in that** the mounting bracket (1) is penetratingly provided with a wire groove (9) extending along a third direction (X); wherein, the first direction (Z) intersects with the third direction (X).

14. A battery pack, **characterized by** comprising:
a battery box (11);
at least one bracket structure according to any one of claims 1 to 13, wherein the bracket structure is fixedly connected to the battery box (11).

15. The battery pack according to claim 14, **characterized in that** the bracket structure further comprises a second connecting member (12), wherein the second connecting member (12) is sleeved on the copper busbar (2);
wherein, the second connecting member (12) is further fixedly connected to the battery box (11).
